# EUROPEAN PATENT SPECIFICATION

(11) **EP 2 273 069 B1**
(45) Date of publication and mention of the grant of the patent: **17.04.2013**
(21) Application number: 10165255.0
(22) Date of filing: 08.06.2010
(51) Int. Cl.: F01D 5/18, B21D 53/78, B21D 26/055, B23K 101/00, B23K 101/18

(54) **A method of forming an internal structure within a hollow component**
Verfahren zum Bilden einer inneren Struktur in einer Hohlkomponente
Procédé de formation d'une structure interne dans un composant creux

(30) Priority: 02.07.2009 GB 0911416
(43) Date of publication of application: 12.01.2011
(73) Proprietor: Rolls-Royce plc, London SW1E 6AT (GB)
(72) Inventor: Mason, John, Barnoldswick, Lancashire BB18 5LP (GB)
(74) Representative: Roberts, Nicholas John

(56) References cited:
- EP-A1- 0 500 458
- EP-A1- 0 527 564
- EP-A1- 0 765 711
- EP-A1- 1 327 489
- EP-A2- 0 181 203
- US-A- 3 111 747
- US-A- 5 240 376
- US-A1- 2007 243 408

## Description

This invention relates to a method of forming an internal structure within a hollow component, and particularly but not exclusively relates to applications of the method in hollow aerofoil components for turbomachines, and also to a membrane and die assembly for use in such a method.

It is known to manufacture hollow metallic aerofoils for example to be used as blades in a jet engine, and in particular fan blades for a turbomachine, by superplastic forming and diffusion bonding metallic panels, the panels forming pressure and suction surfaces of the blade. Such structures are widely used in the civil aerospace industry, for example in wide-chord fan blades, and may also be used in blisks (i.e. bladed disks), particularly in military applications. The metallic panels may include elementary metal, metal alloys and metal matrix composites and at least one of the metallic panels must be capable of superplastic extension. In one known process the surfaces of the panels to be joined are cleaned, and at least one surface of one or more of the panels is coated in preselected areas with a stop-off material, for example yttria, to prevent diffusion bonding. The panels are arranged in a stack and the edges of the panels are welded together, except where a pipe is welded to the panels, to form an assembly. The pipe enables a vacuum, or inert gas pressure, to be applied to the interior of the assembly. The assembly is placed in an autoclave and heated so as to "bake out" the binder from the material to prevent diffusion bonding. The assembly is then evacuated, using the pipe, and the pipe is sealed. The sealed assembly is placed in a pressure vessel and is heated and pressed to diffusion bond the panels together to form an integral structure. Diffusion bonding occurs when two mat surfaces are pressed together under temperature, time and pressure conditions that allow atom interchange across the interface. The first pipe is removed and a second pipe is fitted to the diffusion bonded assembly at the position where the first pipe was located. The integral structure is located between appropriately shaped dies and is placed within an autoclave. The integral structure and dies are heated and pressurised fluid is supplied through the second pipe into the interior of the integral structure to cause at least one of the panels to be superplastically formed to produce an article matching the shape of the dies. In EP1327489 differential pressures (P1, P2) are used in the inflation steps but once the component is in contact with the surfaces of the die P1 and P2 are quickly brought to be the same and a second inflation process occurs in which the pressures P1 and P2 are identical.

In addition to the hollow assembly just described, it is also known to insert a membrane between the metallic panels prior to the above described process. The location of diffusion bonds between the membrane and the adjacent panels can be controlled by applying the stop-off material to preselected areas on each side of the membrane (or respective panels). When the aerofoil is subsequently expanded, the membrane adheres to the panels where the diffusion bond is allowed to form and thereby provides an internal structure. The internal structure is provided to increase the strength and stiffness of the aerofoil and also to prevent "panting" of the panels.

The assembly may be filled or part filled by a suitable material to provide damping of the structure and therefore to reduce vibration. A suitable material may be one which possesses viscoelastic properties. Viscoelasticity is a property of a solid or liquid which when deformed exhibits both viscous and elastic behaviour through the simultaneous dissipation and storage of mechanical energy. A known method is to introduce a viscoelastic material, for example a Huntsman™ syntactic damping paste or a similar product, into the cavity by injecting or otherwise introducing the material into some or all of the cavity. This technique may be applied in a hollow assembly wherein the cavity is smooth walled with no internal structure, see GB2371095 for example. In this configuration the viscoelastic material is restrained solely by the bond between the viscoelastic material and the walls of the cavity. If this bond is not sufficient to retain the viscoelastic material during working conditions, in particular due to centrifugal loading, then, since the viscoelastic material is a parasitic mass which is unable to support its own weight, the hydrostatic load of the unrestrained material may cause the blade to fail rapidly. Accordingly, the consequences of failure of this bond may be severe. It is therefore desirable to provide some form of means for retaining and restraining the viscoelastic material. An internal structure may be used to provide such a restraining or retaining effect on the injected material. However, by providing a rigid internal structure the benefits of damping the aerofoil may be reduced as the aerofoil is less flexible as a result of the internal structure. This may lead to additional problems where the aerofoil prematurely fatigues or cracks as a result of the reduced flexibility. Other configurations use internal ribs, which may be attached to alternate interior walls of the aerofoil but which are not connected to one another, see for example patent application number GB0713699.7. This configuration permits damping of the assembly whilst the non-re-entrant features still provide a means of retaining the injected material. However, the non-re-entrant features do not provide significant retention of the viscoelastic material against the centrifugal load, since the nature of viscoelastic materials results in a tendency to flow when loaded in tension.

Furthermore, the use of an internal structure to physically restrain the viscoelastic material inevitably adds weight to the aerofoil and thus increases the stresses on the aerofoil, in particular at the root of the aerofoil. This increases the blade off energy if the blade were to fail, which must be taken into account when designing the blade retention system. In addition the provision of complex internal structures increases manufacturing costs and lead times. It is therefore desirable to provide an improved method of restraining a viscoelastic material within a cavity which addresses some or all of the above problems associated with the prior art methods.

According to the present invention there is provided a method of forming an internal structure within a hollow component according to claim 1.

Selectively bonding may comprise applying a stop-off material to one or more portions of the at least one membrane and/or the first and second panels and diffusion bonding the component such that the membrane is bonded to the first and second panels except at the one or more portions where the stop-off material is applied.

The at least one membrane may be bonded to only one of the first and second panels.

Either side of the unbonded portion the membrane may be bonded to the first or second panel.

Each of the one or more unbonded portions may define a cavity between the membrane and the first or second panel.

During inflation the pressurised fluid may inflate the cavity between the membrane and the first or second panel so as to form the internal structure.

During deformation the first pressure is applied to the cavity between the membrane and the first or second panel and the second pressure is applied between the membrane and the other of the first or second panel.

The first pressure is greater than the second pressure.

The differential between the first pressure and the second pressure causes the internal structure to be deformed.

The deformed internal structure may create a re-entrant feature.

The at least one membrane may comprise a first membrane and a second membrane and selectively bonding further may comprise applying a stop-off material to the one or both of the opposing surfaces of the first and second membranes to prevent bonding of the first membrane to the second membrane.

According to an embodiment of the present invention there is provided a method of forming an internal structure within a hollow component as claimed in any one of the preceding claims, wherein the die assembly comprises first and second dies each having a forming surface between which the aerofoil structure is placed; the method further comprising moving the die assembly to a second position and further inflating the component by passing a pressurised fluid between the first and second panels such that the first and second panels are inflated into contact with the die assembly in the second position, wherein the distance between at least a portion of the first and second dies is greater in the second position.

The forming surface of the first and/or second dies may have a section which is movable relative to the rest of the forming surface, and wherein moving the die assembly may comprise moving the movable section to the second position.

Selectively bonding may comprise selectively bonding the first membrane to the first panel and selectively bonding the second membrane to the second panel.

The first pressure may be applied between the first membrane and the first panel and between the second membrane and the second panel, and the second pressure may be applied between the first and second membranes.

The pressurised fluid when further inflating the component may be at a first pressure between the first membrane and the first panel and between the second membrane and the second panel, and at a second pressure between the first and second membranes. The first pressure may be lower than the second pressure.

The method may further comprise providing a damping material between the first and second membranes. The damping material may be a viscoelastic material.

The hollow component may be an aerofoil structure.

According to a another embodiment of the present invention there is provided an aerofoil structure comprising first and second panels and first and second membranes disposed between the first and second panels, wherein the first membrane is selectively bonded to the first panel and the second membrane is selectively bonded to the second panel, wherein unbonded portions of the first and second membranes are formed into re-entrant features, the re-entrant features of the first or second membrane being spaced apart from the other of the first or second membrane.

The re-entrant features of the first and second membranes may be offset from one another.

Disposed between the first and second membranes may be a damping material. The damping material may be a viscoelastic material.

The aerofoil structure may be used in a turbomachine.

According to a another embodiment of the present invention there is provided a membrane for a diffusion bonded and superplastically formed aerofoil structure, the membrane comprising: at least one channel formed in a surface of the membrane operable to receive a fluid.

The membrane may comprise a channel on both surfaces of the membrane.

The channel may extend from the perimeter of the membrane.

The channel may comprise a main channel extending from the perimeter of the membrane and a plurality of branches extending from the main channel.

The plurality of branches may extend perpendicularly to the main channel.

The branches may terminate in a radius.

The channel may be coated with a stop-off material which prevents diffusion bonding.

The membrane may be used in a turbomachine.

According to another embodiment of the present invention there is provided die assembly for forming an aerofoil structure, the die assembly comprising: first and second dies each having a forming surface between which the aerofoil structure is placed; wherein the forming surface of the first and/or second dies has a section which is movable relative to the rest of the forming surface.

The movable section may be a central section of the forming surface.

The movable section may be movable toward and away from a central axis between the first and second dies.

The movable section may have a first and second position.

In the first position the aerofoil structure may be inflated into contact with the forming surfaces of the first and second dies to form an internal structure and wherein in the second position the aerofoil structure may be further inflated into contact with the forming surfaces of the first and second dies to take a final form of the aerofoil structure.

According to another embodiment of the present invention there is provided a method of forming an internal structure within an aerofoil structure using a die assembly, the aerofoil structure comprising first and second panels and at least one membrane disposed between the first and second panels and the die assembly comprising first and second dies each having a forming surface; wherein the forming surface of the first and/or second dies has a section which is movable relative to the rest of the forming surface, the method comprising: selectively bonding the at least one membrane to the first and/or second panels; locating the aerofoil structure between the forming surfaces of the first and second dies with the movable section in a first position inflating the aerofoil structure by passing a pressurised fluid between the first and second panels such that the first and second panels are inflated into contact with the forming surfaces of the first and second dies and such that the membrane forms an internal structure between the first and second panels; deforming the internal structure by applying the pressurised fluid at a first pressure on one side of the membrane and at a second pressure on the other side of the membrane; moving the movable section to a second position and further inflating the aerofoil structure such that the first and second panels are inflated into contact with the forming surfaces of the first and second dies.

For a better understanding of the present invention, and to show more clearly how it may be carried into effect, reference will now be made, by way of example, to the accompanying drawings, in which:-
Figure 1 shows an exploded view of the parts of a component, having a membrane in accordance with an embodiment of the invention;
Figure 2 shows a first stage of a method in accordance with another embodiment of the invention, wherein the component of Figure 1 has been assembled and diffusion bonded;
Figure 3 shows a cross-sectional view of the component between a die assembly according to another embodiment of the invention;
Figure 4 shows an enlarged view of the dashed section of Figure 3;
Figure 5 shows the component following a first inflation stage of the method;
Figure 6 shows the component following a second inflation stage of the method;
Figure 7 shows the component following the second inflation stage with the die assembly having been moved to a second position;
Figure 8 shows the component following a subsequent inflation stage of the method;
Figure 9 shows the component following the subsequent inflation stage having a damping material within the cavity;
Figure 10 shows an application of the invention; and
Figure 11 shows a section through the plane A-A of Figure 10.

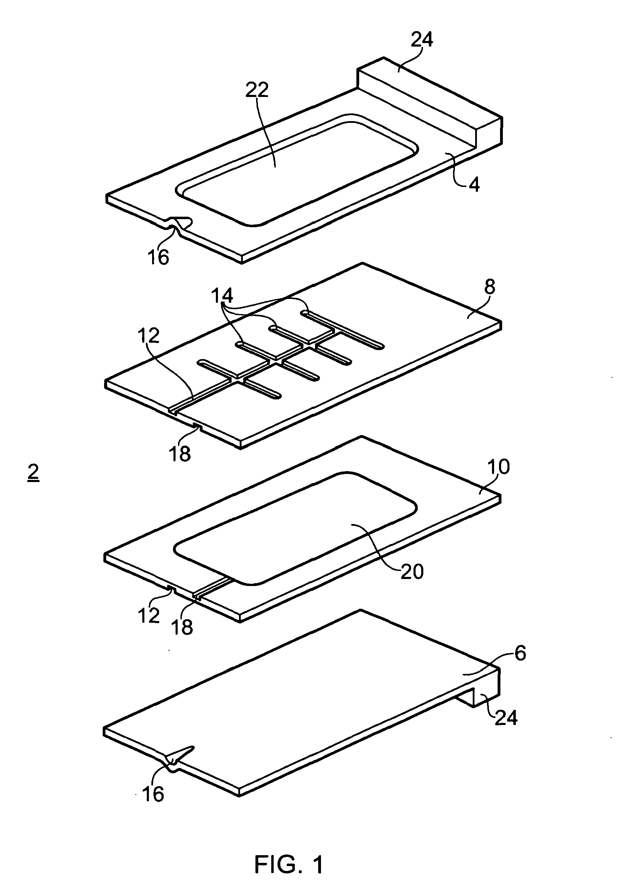

With reference to Figure 1, a component 2 comprises a first panel 4, a second panel 6, a first membrane 8 and a second membrane 10. The first and second membranes 8, 10 are disposed between the first and second panels 4, 6 with the first membrane 8 disposed adjacent the first panel 4 and the second membrane 10 adjacent the second panel 6.

The first and second membranes 8, 10 each comprise a channel 12 formed in a surface of the membrane, the channel extending from the perimeter of the membrane. Each channel 12 has a plurality of branches 14 which extend perpendicularly from the channel 12, the branches each terminating in a radius. The channel 12 and branches 14 are coated with a stop-off material using any conventional coating method.

As described previously the stop-off material prevents the areas to which is applied from diffusion bonding and thus the channels 12 and branches 14 are not bonded to the first and second panels 4, 6 providing a fluid path through the channel 12 and to the branches 14. The surfaces of the first and second membranes 8, 10 with the channel 12 formed therein are disposed adjacent and facing the first and second panels 4, 6.

Instead of forming the channel 12 and branches 14 in the surface of the membrane, the stop-off material may be used to provide a fluid path by applying it to the surface of the membrane in a similar shape to that of the channel 12 and branches 14. Fluid can then be forced down the unbonded paths created by the stop-off material. However, the channel 12 and branches 14 provide a more efficient fluid path and allow the stop-off material to be applied more accurately.

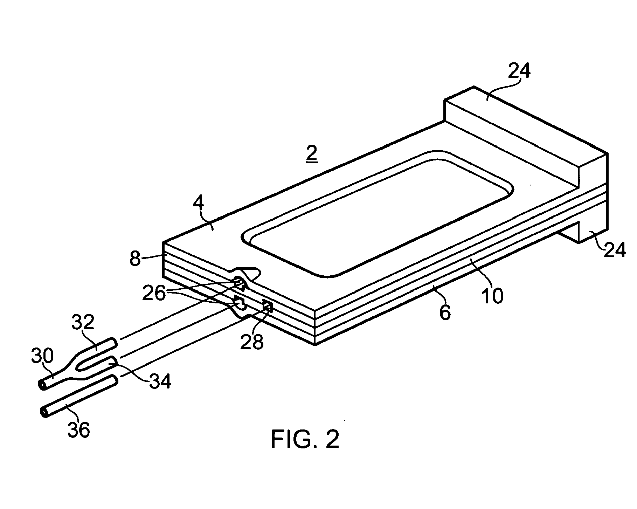

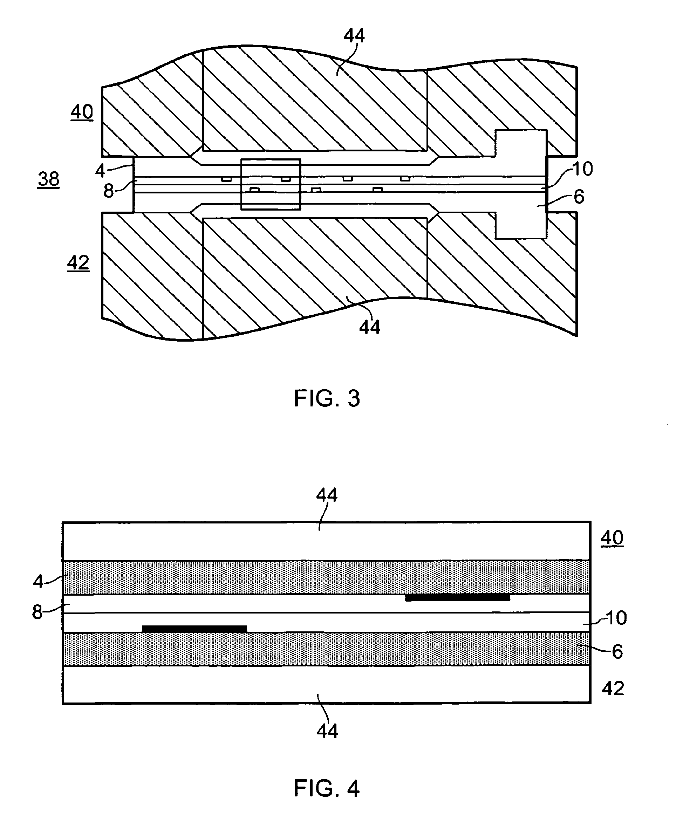

In the opposing surfaces of the first and second panels 4, 6, a first port 16 is formed. The first port 16 combines with the opening to the channel 12 at the perimeter of the membrane to provide an membrane-panel port 26, as shown in Figure 2, suitable for receiving a fluid. The branches 14 of the first and second membranes 8, 10 are arranged such that the branches 14 of the first membrane 8 are offset from the branches (not shown) of the second membrane 10, as shown in Figure 3.

The opposing surfaces of the first and second membranes 8, 10 are provided with a second port 18. The second ports 18 of the first and second membranes 8, 10 combine to provide a membrane-membrane port 28, as shown in Figure 2, suitable for receiving a fluid. The opposing surfaces of the first and/or second membranes 8, 10 are coated with the stop-off material over an area 20 to prevent diffusion bonding of the first and second membranes 8, 10 at the area 20. The second port 18 extends from the perimeter of the membrane to the area 20 and thus provides fluidic coupling between the exterior of the membrane and the area 20. The area 20 of the first and second membranes 8, 10 surrounds the area bounded by the branches 14, such that the ends of the branches 14 extend tangentially to the perimeter of the area 20. Similarly to the channel 12 and branches 14, the area 20 may be recessed slightly to provide a more efficient fluid path and to allow the stop-off material to be applied more accurately.

The membrane-panel port 26 and membrane-membrane port 28 are coated with the stop off material to prevent bonding and to maintain a fluid entry between the adjacent parts.

The first and second panels 4, 6 each comprise a relief 22 formed in a portion of the exterior surface of the panel, such that the portion of the panel is thinner than the rest of the panel. The relief 22 is approximately the same dimensions as the area 20 and is coincident with the area 20.

Alternatively, a single membrane may be used having the channel and branch arrangement described above. The membrane may have a channel and plurality of branches formed on both of its surfaces. The branches formed in the one surface of the membrane are offset from the branches formed in the opposite surface of the membrane. Alternatively, the branch channel arrangement can be provided on one side only of the membrane with the other side containing one or more channels which permit gas to enter between the membrane and the panel.

The first and second panels 4, 6 may be suction and pressure panels of an aerofoil structure, in particular a blade for a turbomachine, such as a compressor fan blade. Each of the first and second panels comprise a root block 24 which are joined to form the root of the aerofoil structure for attachment to a hub.

Figure 2 shows the component 2 having been assembled and diffusion bonded as described previously. The first and second membranes 8, 10 are bonded to one another and the first and second membranes 8, 10 bonded to the first and second panels 4, 6 except where the stop-off material has been applied, i.e. the area 20 between the first and second membranes 8, 10, and the channel 12 and branches 14 between the first and second membranes 8, 10 and the first and second panels 4, 6.

A first pipe 30 is attached, for example by welding, to the membrane-panel ports 26 and second pipe 36 is attached to the membrane-membrane port 28. The first pipe 30 is bifurcated into first and second branches 32 and 34. The first branch 32 is connected to the membrane-panel port 26 between the first panel 4 and first membrane 8 and the second branch 34 is connected to the membrane-panel port 26 between the second panel 6 and second membrane 10. The first pipe 30 therefore allows a pressurised fluid (typically argon) to enter the cavities defined between both the first membrane 8 and the first panel 4 and also the second membrane 10 and the second panel 6 (the membrane-panel cavities). The second pipe 36 allows a pressurised fluid to enter the cavity defined between the first and second membranes 8, 10 (the membrane-membrane cavity).

The first and second pipes 30, 36 are each connected to a separate fluid management system which supplies the pressurised fluid and is capable of pressuring and venting the cavities. Due to the bifurcated nature of the first pipe 30, the pressure of the fluid supplied to the separate cavities is equal. If this is not desired, for example if a different geometry was required for the first and second membranes 8, 10 and/or first and second panels 4, 6, a third pipe could be used to connect a third fluid management system thus providing a separate supply for each of the cavities.

With the first and second pipes 30, 32 (and third pipe) attached, the component 2 is placed in a die assembly 38, which is capable of heating the component 2 to sufficient temperature to allow superplastic forming. The die assembly comprises a first die 40 and a second die 42 between which the component 2 is disposed. Each of the first and second dies 40, 42 comprise a central section 44 which is movable relative to the rest of the die, toward and away from the component 2 disposed between the dies. The central movable sections 44 may be moved by a hydraulic actuator or other conventional actuation means.

The central movable sections 44 of the first and second dies 40, 42 are initially located in a first position, wherein a gap is left between the relief 22 of the first and second panels 4, 6 and the surface of the central movable sections 44.

The component 2 is heated and a pressurised fluid is supplied into the membrane-panel ports 26 and membrane-membrane port 28 simultaneously. The pressurised fluid passes down the cavity formed by the channels 12 and branches 14 and also the cavity between the first and second membranes over the area 20. The pressure of the fluid in the membrane-panel cavities, P₁, is approximately equal to the pressure of the fluid in the membrane-membrane cavity, P₂.

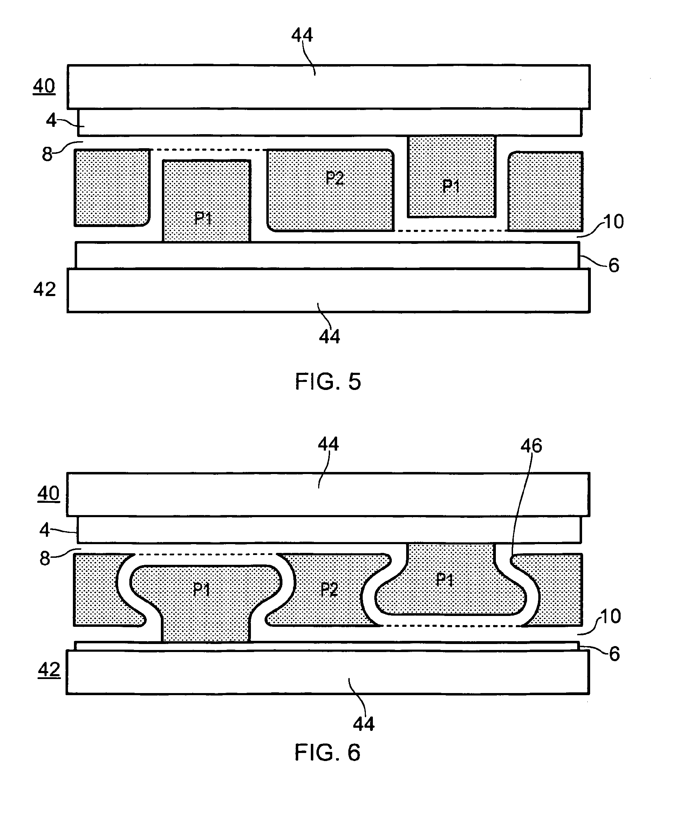

The unbonded branches 14 are formed such that they are forced against the other membrane and thus cause the first and second panels to be inflated into contact with the central movable sections 44 of the first and second dies 40, 42, as shown in Figure 5. The first and second membranes 8, 10 form an internal structure disposed between the first and second panels 4, 6.

The formation of the internal structure is facilitated by the channel 12 and branches 14 since the membrane is thinner at the location of these features.

Figure 6 shows a second stage of the inflation process in which the internal structure created by the first and second membranes 8, 10 is deformed. In this second stage, the component 2 is restrained by the die assembly 38 and a pressure differential is created between the membrane-panel cavities and membrane-membrane cavity. The pressure, P₁, of the fluid supplied to the membrane-panel cavities is greater than the pressure, P₂, of the fluid supplied to the membrane-membrane cavity. Since the component is restrained by the die assembly 38, the pressure differential causes the internal structure formed by the first and second membranes 8, 10 to be deformed in a direction which is substantially parallel to the plane of the first or second panels 4, 6. Once the membrane has been deformed sufficiently, the fluid pressures P₁ and P₂ are equalised and the geometry of the membranes are then fixed.

The deformation of the internal structure creates re-entrant features within the component 2. The re-entrant features have a profile as shown in Figure 6, wherein the unbonded portion of the membrane curves back over the bonded portions of the membrane which are either side of the unbonded portion. The membrane curves back with a small internal radius 46.

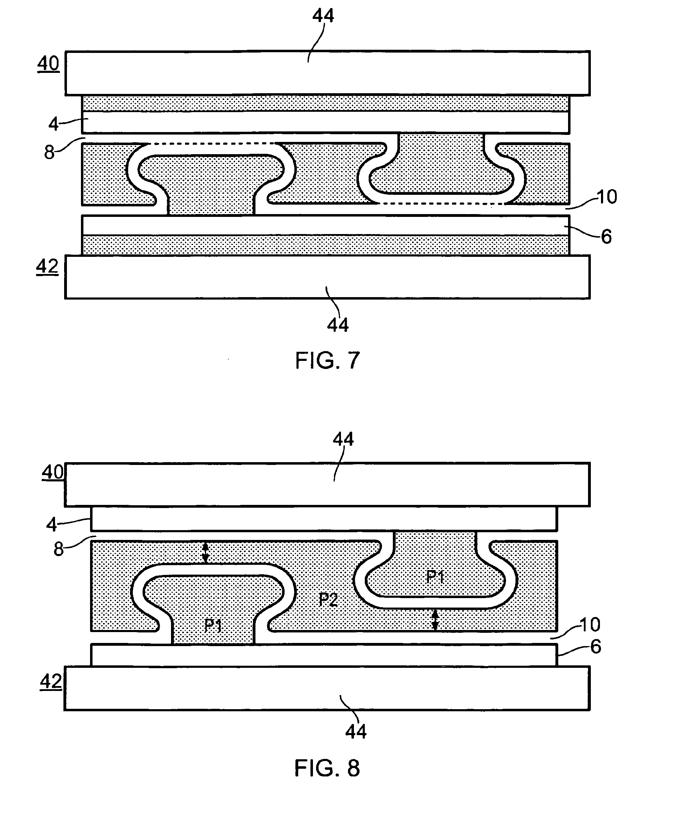

Figure 7 shows a subsequent inflation stage wherein the central movable sections 44 of the first and second dies 40, 42 are moved to a second position which is further away from the component 2 so that the first and second panels 4, 6 are no longer in contact with the die assembly 38. The pressure P₂ in the membrane-membrane cavity is increased such that the first and second panels are forced into contact with the central movable sections 44 in the second position, thus creating a gap between the first and second membranes 8, 10, as shown in Figure 8. The pressure P₁ is maintained at a lower pressure than P₂ during this stage to ensure that the re-entrant features are not further deformed.

As an alternative to the die assembly 38, first and second die assemblies could be used, the first and second die assemblies having dies arranged in the first and second positions respectively. In this arrangement, the component 2 would be transferred from the first die assembly to the second die assembly for the inflation stage shown in Figures 7 and 8. However the die assembly 38 would increase the efficiency and speed of the process.

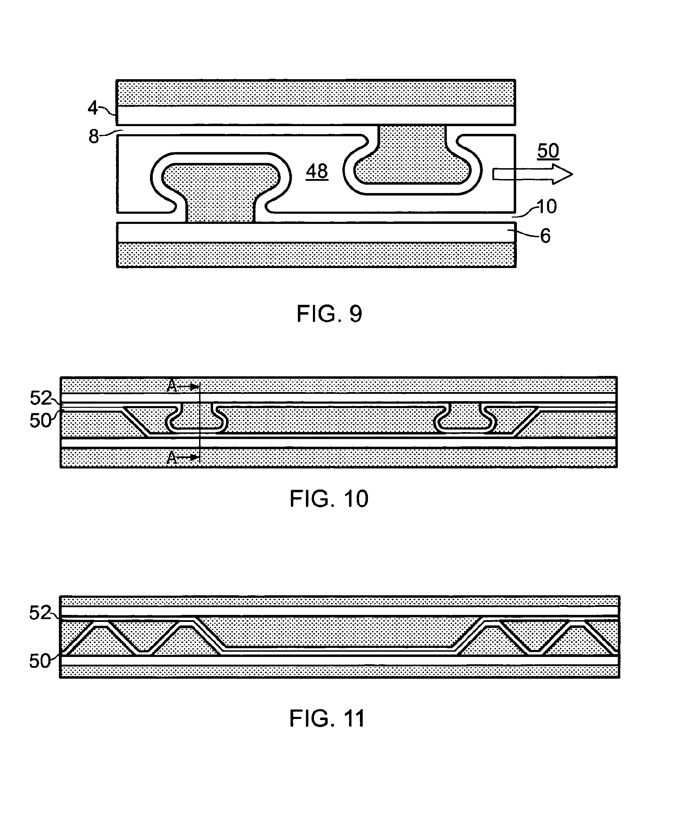

Once the component 2 has been inflated by the pressurized fluid to produce the final geometry shown in Figure 8, the membrane-membrane cavity is filled with a damping material 48, particularly a viscoelastic material, as shown in Figure 9. The damping material may be a polymer, for example a Huntsman™ syntactic damping paste or a similar product.

In use, the damping material 48 is restrained by the re-entrant features. The left hand side of the component 2 shown in Figure 9 is the root end of the aerofoil structure and the right hand side is the tip end of the aerofoil structure. In the application as a blade for a turbomachine, the rotation of the blade creates a centrifugal load in the direction of the arrow 50. The centrifugal load is opposed by the re-entrant features and thus prevents the damping material from flowing within the cavity. If allowed to do so, the damping material would quickly cause the blade to fail. The internal radius 46 dissipates stresses created when the re-entrant feature is acting to restrain the damping material.

The method of the present invention uses simple membrane sheets, which are relatively inexpensive to manufacture, to create re-entrant features. This has not previously been possible. Advantageously, the re-entrant features are created within existing process capabilities.

The formation of the channel 12 and branches 14 within the surface of the membrane provides an open fluid path into the cavity and thus gives a more efficient passage of fluid during the initial inflation of the component. In addition, the stop-off material can be applied very accurately within the recesses of the channel 12 and branches 14. This eliminates alignment issues between the stop-off material and the component which is a common problem when applying the stop-off material.

The re-entrant features of the invention could be accommodated into any hollow structure that it manufactured from a material that supports super plastic forming. For example, the invention could be incorporated into large hollow civil fan blades, where it could be applied locally to damp areas that are susceptible to unwanted vibrations. These fan blades typically have a warren girder structure formed by a single membrane. The warren girder structure may be truncated in the areas to be damped by bonding the warren girder membrane 50 to the first or second panels, as shown in Figure 10. A membrane 52, which is otherwise bonded to the other of the first or second panels, has one or more unbonded sections in the truncated area. These unbonded sections may be inflated and deformed in accordance with the method described above to form re-entrant features in the truncated area. The re-entrant features are formed perpendicular to the axis of the centrifugal load, with the tip and root ends being at either side of Figure 10.

Figure 11 shows a cross-section through the plane A-A of Figure 10. As shown the warren girder membrane has a leading edge warren girder structure and a trailing edge warren girder structure either side of the truncated area, which run from the root end of the blade to the tip end of the blade. The re-entrant feature is inflated against the leading and trailing edge warren girder structures such that an enclosed cavity 54 is formed by the re-entrant feature. This enclosed cavity 54 is filled with a damping material, particularly a viscoelastic material, as described previously.

In addition to retaining a damping material, the invention could also be used to provide additional strength and rigidity to hollow structures. Furthermore, the re-entrant features could be used to carry cooling fluids inside static structures such as exhaust heat shields, or heated fluids to prevent ice formation.

## Claims

1. A method of forming an internal structure within a hollow component, the component comprising first and second panels (4,6) and at least one membrane (8,10) disposed between the first and second panels, the method comprising:
selectively bonding the at least one membrane to the first and/or second panels;
inflating the component by passing a pressurised fluid between the first and second panels (4,6) such that the first and second panels are inflated into contact with a die assembly(40, 42) and such that the membrane forms an internal structure between the first and second panels; and
**characterised by** subsequently deforming the internal structure in a direction which is substantially parallel to a plane of the first or second panel by applying the pressurised fluid at a first pressure (P1) on one side of the membrane and at a second pressure (P2) on the other side of the membrane, where P1 is greater than P2.

2. A method of forming an internal structure within a hollow component as claimed in claim 1, wherein selectively bonding comprises applying a stop-off material to one or more portions of the at least one membrane (8, 10) and/or the first and second panels and diffusion bonding the component such that the membrane is bonded to the first and second panels except at the one or more portions where the stop-off material is applied.

3. A method of forming an internal structure within a hollow component as claimed in any one of the preceding claims, wherein the at least one membrane (8, 10) is bonded to only one of the first and second panels.

4. A method of forming an internal structure within a hollow component as claimed in claim 3, wherein each of the one or more unbonded portions define a cavity between the membrane (8, 10) and the first or second panel.

5. A method of forming an internal structure within a hollow component as claimed in any one of the preceding claims, wherein during inflation the pressurised fluid inflates the cavity between the membrane (8; 10) and the first or second panel so as to form the internal structure.

6. A method of forming an internal structure within a hollow component as claimed in any one of the preceding claims, wherein during deformation the first pressure is applied to the cavity between the membrane (8; 10) and the first or second panel and the second pressure is applied between the membrane (8, 10) and the other of the first or second panel.

7. A method of forming an internal structure within a hollow component as claimed in claim 6, wherein the differential between the first pressure and the second pressure causes the internal structure to be deformed.

8. A method of forming an internal structure within a hollow component as claimed in any one of the preceding claims, wherein the deformed internal structure creates a re-entrant feature.

9. A method of forming an internal structure within a hollow component as claimed in any one of the preceding claims, wherein the at least one membrane (8, 10) comprises a first membrane (8) and a second membrane (10)and selectively bonding further comprises applying a stop-off material to the one or both of the opposing surfaces of the first and second membranes to prevent bonding of the first membrane to the second membrane.

10. A method of forming an internal structure within a hollow component as claimed in any one of the preceding claims, wherein the die assembly comprises first and second dies each having a forming surface between which the aerofoil structure is placed; the method further comprising moving the die assembly to a second position and further inflating the component by passing a pressurised fluid between the first and second panels (4,6) such that the first and second panels are inflated into contact with the die assembly in the second position, wherein the distance between at least a portion of the first and second dies is greater in the second position.

11. A method of forming an internal structure within a hollow component as claimed in claim 10, wherein the forming surface of the first and/or second dies has a section which is movable relative to the rest of the forming surface, and wherein moving the die assembly comprises moving the movable section to the second position.

12. A method of forming an internal structure within a hollow component as claimed in any one of claims 9 to 11, wherein the first pressure is applied between the first membrane (8) and the first panel and between the second membrane (10) and the second panel, and the second pressure is applied between the first and second membranes.

13. A method of forming an internal structure within a hollow component as claimed in any one of the preceding claims, wherein the hollow component is an aerofoil structure.

## Patentansprüche

1. Verfahren zum Bilden einer inneren Struktur in einem hohlen Bauteil, wobei das Bauteil erste und zweite Platten (4, 6) und zumindest eine Membran (8, 10) aufweist, die zwischen den ersten und zweiten Platten angeordnet ist, wobei das Verfahren Folgendes umfasst:
selektives Bonden der zumindest einen Membran mit der ersten und/oder der zweiten Platte;
Aufblasen des Bauteils durch Einleiten eines unter Druck stehenden Strömungsmittels zwischen die ersten und zweiten Platten (4, 6) derart, dass die ersten und zweiten Platten in Kontakt mit einer Formgesenk-Baugruppe (40, 42) aufgeblasen werden, und derart, dass die Membran eine innere Struktur zwischen den ersten und zweiten Platten bildet; und
**gekennzeichnet durch** nachfolgendes Verformen der inneren Struktur in einer Richtung, die im Wesentlichen parallel zu einer Ebene der ersten oder zweiten Platte ist, **durch** Zuführen des unter Druck stehenden Strömungsmittels mit einem ersten Druck (P1) auf einer Seite der Membran und einem zweiten Druck (P2) auf der anderen Seite der Membran, wobei P1 größer als P2 ist.

2. Verfahren zum Bilden einer inneren Struktur in einem hohlen Bauteil nach Anspruch 1, bei dem das selektive Bonden das Aufbringen eines ein Bonden verhindernden Abdeckmaterials auf einen oder mehrere Abschnitte der zumindest einen Membran (8, 10) und/oder der ersten und zweiten Platten, und Diffusionsbonden des Bauteils derart umfasst, dass die Membran mit den ersten und zweiten Platten mit Ausnahme an dem einen oder den mehreren Abschnitten bondiert wird, auf die das Abdeckmaterial aufgebracht wurde.

3. Verfahren zum Bilden einer inneren Struktur in einem hohlen Bauteil nach einem der vorhergehenden Ansprüche, bei dem die zumindest eine Membran (8, 10) mit lediglich einer der ersten und zweiten Platten bondiert wird.

4. Verfahren zum Bilden einer inneren Struktur in einem hohlen Bauteil nach Anspruch 3, bei dem jeder der einen oder mehreren nicht bondierten Abschnitte einen Hohlraum zwischen der Membran (8, 10) und der ersten oder zweiten Platte bildet.

5. Verfahren zur Bildung einer inneren Struktur in einem hohlen Bauteil nach einem der vorhergehenden Ansprüche, bei dem während des Aufblasens das unter Druck stehende Strömungsmittel den Hohlraum zwischen der Membran (8, 10) und der ersten oder zweiten Platte aufbläst, um die interne Struktur zu bilden.

6. Verfahren zum Bilden einer inneren Struktur in einem hohlen Bauteil nach einem der vorhergehenden Ansprüche, bei dem während der Verformung der erste Druck aus dem Hohlraum zwischen der Membran (8, 10) und der ersten oder zweiten Platte zugeführt wird, und der zweite Druck zwischen der Membran (8, 10) und der anderen der ersten oder zweiten Platte zugeführt wird.

7. Verfahren zum Bilden einer inneren Struktur in einem hohlen Bauteil nach Anspruch 6, bei dem die Differenz zwischen dem ersten Druck und dem zweiten Druck eine Verformung der inneren Struktur hervorruft.

8. Verfahren zum Bilden einer inneren Struktur in einem hohlen Bauteil nach einem der vorhergehenden Ansprüche, bei dem die verformte innere Struktur ein einspringendes Merkmal erzeugt.

9. Verfahren zur Bildung einer inneren Struktur in einem hohlen Bauteil nach einem der vorhergehenden Ansprüche, bei dem die zumindest eine Membran (8, 10) eine erste Membran (8) und eine zweite Membran (10) umfasst, und das selektive Bonden das Aufbringen eines ein Bonden verhindernden Abdeckmaterials auf eine oder beide der einander gegenüberliegenden Oberflächen der ersten und zweiten Membranen umfasst, um ein Bonden der ersten Membran an die zweite Membran zu verhindern.

10. Verfahren zur Bildung einer inneren Struktur in einem hohlen Bauteil nach einem der vorhergehenden Ansprüche, bei dem die Formgesenk-Baugruppe erste und zweite Gesenke umfasst, die jeweils eine Formgebungs-Oberfläche aufweisen, zwischen denen die Schaufelstruktur angeordnet wird; wobei das Verfahren weiterhin die Bewegung der Gesenkbaugruppe auf eine zweite Position und das weitere Aufblasen des Bauteils durch Einleiten eines unter Druck stehenden Strömungsmittels zwischen die ersten und zweiten Platten (4, 6) derart umfasst, dass die ersten und zweiten Platten in Kontakt mit der Formgesenk-Baugruppe in der zweiten Position aufgeblasen werden, wobei der Abstand zwischen dem zumindest einen Teil der ersten und zweiten Gesenke in der zweiten Position größer ist.

11. Verfahren zur Bildung einer inneren Struktur in einem hohlen Bauteil nach Anspruch 10, bei dem die Formgebungs-Oberfläche des ersten und/oder zweiten Gesenks einen Abschnitt aufweist, der gegenüber dem Rest der Formgebungs-Oberfläche beweglich ist, und bei dem die Bewegung der Formgesenk-Baugruppe die Bewegung des beweglichen Abschnittes auf die zweite Position umfasst.

12. Verfahren zur Formung einer inneren Struktur in einem hohlen Bauteil nach einem der Ansprüche 9 bis 11, bei dem der erste Druck zwischen der ersten Membran (8) und der ersten Platte und zwischen der zweiten Membran (10) und der zweiten Platte zugeführt wird, und der zweite Druck zwischen den ersten und zweiten Membranen zugeführt wird.

13. Verfahren zur Bildung einer inneren Struktur in einem hohlen Bauteil nach einem der vorhergehenden Ansprüche, bei dem das hohle Bauteil eine Schaufelstruktur ist.

## Revendications

1. Procédé de formation d'une structure interne dans un composant creux, le composant comprenant des premier et deuxième panneaux (4, 6) et au moins une membrane (8, 10) disposée entre les premier et deuxième panneaux, le procédé comprenant :
la liaison sélective de ladite au moins une membrane au premier et/ou au deuxième panneau ;
le gonflage du composant en faisant passer un fluide sous pression entre les premier et deuxième panneaux (4, 6) de sorte que les premier et deuxième panneaux soient gonflés en contact avec un assemblage de matrices (40, 42) et de sorte que la membrane forme une structure interne entre les premier et deuxième panneaux ; et
**caractérisé par** la déformation par la suite de la structure interne dans une direction qui est sensiblement parallèle à un plan du premier ou du deuxième panneau en appliquant le fluide sous pression à une première pression (P1) sur un côté de la membrane et à une deuxième pression (P2) sur l'autre côté de la membrane, où P1 est supérieure à P2.

2. Procédé de formation d'une structure interne dans un composant creux selon la revendication 1, dans lequel la liaison sélective comprend l'application d'un matériau d'arrêt à une ou plusieurs parties de ladite au moins une membrane (8, 10) et/ou des premier et deuxième panneaux et la liaison par diffusion du composant de sorte que la membrane soit liée aux premier et deuxième panneaux, excepté au niveau desdites une ou plusieurs parties où le matériau d'arrêt est appliqué.

3. Procédé de formation d'une structure interne dans un composant creux selon l'une quelconque des revendications précédentes, dans lequel ladite au moins une membrane (8, 10) est liée à un seul des premier et deuxième panneaux.

4. Procédé de formation d'une structure interne dans un composant creux selon la revendication 3, dans lequel chacune desdites une ou plusieurs parties non liées définissent une cavité entre la membrane (8, 10) et le premier ou le deuxième panneau.

5. Procédé de formation d'une structure interne dans un composant creux selon l'une quelconque des revendications précédentes, dans lequel, pendant le gonflage, le fluide sous pression gonfle la cavité entre la membrane (8, 10) et le premier ou le deuxième panneau de manière à former la structure interne.

6. Procédé de formation d'une structure interne dans un composant creux selon l'une quelconque des revendications précédentes, dans lequel, pendant la déformation, la première pression est appliquée à la cavité entre la membrane (8, 10) et le premier ou le deuxième panneau et la deuxième pression est appliquée entre la membrane (8, 10) et l'autre du premier ou du deuxième panneau.

7. Procédé de formation d'une structure interne dans un composant creux selon la revendication 6, dans lequel le différentiel entre la première pression et la deuxième pression provoque la déformation de la structure interne.

8. Procédé de formation d'une structure interne dans un composant creux selon l'une quelconque des revendications précédentes, dans lequel la structure interne déformée crée une caractéristique rentrante.

9. Procédé de formation d'une structure interne dans un composant creux selon l'une quelconque des revendications précédentes, dans lequel ladite au moins une membrane (8, 10) comprend une première membrane (8) et une deuxième membrane (10) et la liaison sélective comprend en outre l'application d'un matériau d'arrêt à ladite une ou aux deux des surfaces opposées des première et deuxième membranes pour empêcher la liaison de la première membrane à la deuxième membrane.

10. Procédé de formation d'une structure interne dans un composant creux selon l'une quelconque des revendications précédentes, dans lequel l'assemblage de matrices comprend des première et deuxième matrices comportant chacune une surface de formation entre lesquelles une structure profilée est placée ; le procédé comprenant en outre le déplacement de l'assemblage de matrices à une deuxième position et en outre le gonflage du composant en faisant passer un fluide sous pression entre les premier et deuxième panneaux (4, 6) de sorte que les premier et deuxième panneaux soient gonflés en contact avec l'assemblage de matrices dans la deuxième position, dans lequel la distance entre au moins une partie des première et deuxième matrices est plus grande dans la deuxième position.

11. Procédé de formation d'une structure interne dans un composant creux selon la revendication 10, dans lequel la surface de formation de la première et/ou de la deuxième matrice a une section qui est mobile par rapport au reste de la surface de formation, et dans lequel le déplacement de l'assemblage de matrices comprend le déplacement de la section mobile à la deuxième position.

12. Procédé de formation d'une structure interne dans un composant creux selon l'une quelconque des revendications 9 à 11, dans lequel la première pression est appliquée entre la première membrane (8) et le premier panneau et entre la deuxième membrane (10) et le deuxième panneau, et la deuxième pression est appliquée entre les première et deuxième membranes.

13. Procédé de formation d'une structure interne dans un composant creux selon l'une quelconque des revendications précédentes, dans lequel le composant creux est une structure profilée.
